# EUROPEAN PATENT APPLICATION

(11) **EP 2 849 385 A1**
(43) Date of publication of application: **18.03.2015**
(21) Application number: 13184392.2
(22) Date of filing: 13.09.2013
(51) Int. Cl.: H04L 12/26, H04L 29/08, G06F 17/30, G06F 11/34, G06Q 30/02

(54) **Method for filtering web contents queried by users of a network**

(71) Applicant: ALCATEL LUCENT, 92100 Boulogne-Billancourt (FR)
(72) Inventor: Ben Houidi, Zied, 91620 Nozay (FR); Scavo, Giuseppe, 91620 Nozay (FR)
(74) Representative: Camus, Olivier Jean-Claude

(57) **Abstract**

The present invention relates to a method for filtering web contents queried by users from a stream of web content requests received by a web server of a network, each web content request comprising a field referrer, said referrer representing a web address from which is issued the web content request, said method comprising a main step of: for each web content request of a subset of said stream, named considered request:
- performing a main test, which is:
■ negative if the referrer of the considered request is comprised in a list of web addresses
■ positive otherwise

- in case of a positive main test, adding the referrer to the list of web addresses.

## Description

### FIELD OF THE INVENTION

The present invention relates to the field of web addresses, also called URLs (Uniform Resource Locator), referencing web contents: HTLM documents, images, sounds, advertisements, etc. The invention relates more particularly to a method for filtering web contents queried by users on a network. Indeed, web content requests, also called HTTP requests, observed on a network are not necessarily user requests: some are automatically generated requests.

In a browser, when a user clicks on a web address (URL), a request for the web content associated to the web address is generated by said browser. This type of request is called a user request: it corresponds to a web content intentionally queried by the user.

This user request is sent to a web server, which responds by returning the HTML code describing the requested web content. Then, the browser analyses the code, looking for web contents that are necessary to render the requested web content (for example images, advertisements, etc). For each of these web contents, the browser sends a request to the web server, so as to get them. These requests are called automatically generated requests.

### BACKGROUND

In the general context of data analytics or in the context of content and media curation, web contents are sorted, analyzed or organized by observing the web content requests.

However, in the case the web content requests are extracted from the network traffic, as previously explained, these web content requests are not necessarily user requests: they do not necessarily correspond to web content intentionally visited by users, that is to say the web content queried by users.

As a consequence, an important technical problem is to pinpoint web contents queried by users from a stream of web content requests observed in a network.

Some filtering algorithms have been proposed to tackle this problem.

A first filtering algorithm, called "time-based filtering", is described in the document "Generating representative web workloads for network and server performance evaluation", by P. Barford and M. Crovella, in ACM SIGMETRICS, 1998. In this filtering algorithm, the time between two web content requests is considered. If the idle time between two web content requests is shorter than a given threshold, the web content requests are considered as automatically generated by the browser. This is based on the idea that automatically generated requests are a burst of requests that come very shortly after a user request (that is to say a user clicking on an URL).

However, this algorithm proposed in the web's early days is not reliable anymore. Indeed, nowadays browsers are multi-tab: it can happen that a user opens in a few seconds several pages using different tabs. In that case, it is the browser that decides the order of the requests: many user requests can therefore happen very close in time, in such a way that affects the performance of the time-based filtering. Another inconvenience is that the threshold is difficult to set because multiple factors have to be taken into account, such as the speed of the network, the speed of the user device, the load of the web server, the DNS response time, etc. For example, the presence of an ajax script in a page can heavily change the time patterns of the request.

A second filtering algorithm, called "type-based filtering", is described in the document "A behavioral model of web traffic", by H.-K. Choi and J.O. Limb, in IEEE ICNP, 1999. The type-based algorithm is based on the inspection of the content-type field contained in the responses sent by the web server for each web content request. Each time an HTML file is found this way, it is marked as a main object and all the subsequent objects belong to it. A main object is a web content intentionally queried by a user.

However, this solution needs to monitor the web content requests and the corresponding responses: a lot of data have to be handled, which is time consuming. Besides, the content type field has been shown to be not precise and therefore not reliable.

A third filtering algorithm, called "stream-structure algorithm" is described in the document "Towards understanding modern web traffic", by S. Ihm and V.S. Pai, in ACM IMC, 2011. This algorithm is more adapted to today's web traffic which has changed compared to earlier times (pages became dynamic; pages contain client side scripts, etc). This algorithm comprises three steps: grouping web contents into streams, detecting main objects, and identifying initial web contents, that is to say web contents intentionally queried by users.

In the first step of grouping web contents into streams, a referrer field contained in each web content request is used. The referrer field indicates from which previous web content a given web content request has been issued. In other words, the referrer is the web address of the web content that linked to the requested web content. If a web content is visited for the first time, that is to say prior to any browsing activity, the referrer field of the associated request is void. In this web content, if a user clicks on a URL pointing a second web content, the request for this second web content has the first web page as a referrer. The idea is to separate the web content requests into multiple independent streams. These streams aim at containing independent browsing activities: for example, a first stream concerns a browsing activity that started on a first tab of a first browser, while a second stream concerns a browsing activity that started at a second browser. The head of each stream is the web content whose request contains the void referrer. All the web content that are requested later and that have the initial web content as referrer are added to the stream. If a new referrer is observed, and if said referrer was requested in the previous stream, then the requests containing this referrer are added to the stream. If a request with a void referrer is observed, then a new stream is created. Then, web content requests are divided into independent streams, which allows to reduce the temporal overlap between requests.

In the second step of detecting main objects, the type-based filtering algorithm is applied: HTML web contents are detected as candidates and non-HTML web contents are ignored.

In the third step of identifying initial web contents, the time-based filtering is applied to discard the web contents that come too soon after a main object. Since the web contents are grouped into streams, there is less chance that requests for main objects belonging to the same stream overlap in time. A dynamic threshold is used, so as to be adapted to the loading time of the web content.

However, this third filtering algorithm presents the drawbacks of the time-based filtering algorithm and the drawbacks of the type-based filtering algorithm.

### SUMMARY

It is an object of the invention to provide a filtering method overcoming these drawbacks.

To this end, the invention provides a method for filtering web contents queried by users from a stream of web content requests between a web server and a web browser, observed on a network, each web content request comprising a field referrer, said referrer representing a web address from which is issued the web content request, said method comprising a main step of: for each web content request of a subset of said stream, named considered request:
- performing a main test, which is:
   ■ negative if the referrer of the considered request is already comprised in a list of web addresses
   ■ positive otherwise
- in case of a positive main test, adding the referrer to the list of web addresses.

At the beginning of the method, the list of web addresses is empty. Then, the list of web addresses is filled with referrers of the web content requests of the subset. In a not limited embodiment, the subset is the stream. In another not limited embodiment, the subset is a part of the stream: this allows a pre-filtering of the web content requests. The method according to the invention relies on the following assessment: all the web contents automatically requested have the web content queried by users as referrers. As a consequence, by extracting the referrers of the web content requests, all web contents queried by users are captured.

According to a not limited embodiment, the method comprises:
- within the main step: in case of a positive main test, adding the considered request to a list of requests, and
- further to the main step: performing an extra filtering applied to the requests of the list of requests.

Indeed, the above described filtering method not only detects the web content queried by users but also all complex web contents whose loading needs to load other web contents. The extra filtering allows to get rid of these irrelevant web contents.

According to a not limited embodiment, the extra filtering uses a time-based filtering algorithm.

According to a not limited embodiment, the extra filtering uses a stream-structure filtering algorithm followed by a time-based filtering algorithm.

According to a not limited embodiment, the method comprises, within the main step: in case of a positive main test, determining a timestamp associated to the referrer of the considered request. This timestamp is used if a time-based extra filtering is performed.

According to a not limited embodiment, the timestamp is the occurrence time of the considered request. The time between a request for a main web content and the requests for its objects being small, this is a good approximation.

According to a not limited embodiment, the timestamp is the occurrence time of a particular web content request of the subset, such as:
- said web object has the same address as the referrer
- said particular web object request occurs before the considered request.

This is a more precise way of determining the timestamp.

According to a not limited embodiment, the extra filtering uses a type-based filtering algorithm.

According to a not limited embodiment, the extra filtering step comprises a supplementary step of, for each referrer of the list of web addresses:
- performing a supplementary test, which is:
   ■ positive if the web content having the referrer as address is of a predetermined type
   ■ negative otherwise
- in case of a positive supplementary test, removing the referrer from the list of web addresses.

The predetermined types are for example known types of complex web objects. False positive are avoided, for example by filtering web contents whose extension is *.swf (flash players), *.js (javascripts) or *.css (CSS files).

According to a not limited embodiment, the method comprises a preliminary step of: for each web content request of the stream:
- performing a preliminary test, which is:
   ■ positive if the web content request is issued from a browser
   ■ negative otherwise
- in case of a positive preliminary test, adding the web content request to the subset.

Indeed, certain applications that are not browsers use HTTP as a protocol to exchange information. Then, a pre filtering is advantageous.

According to a not limited embodiment, the method comprises a step, prior to the main step, of separating the web content requests of the stream by users.

In addition, there is provided a computer program product for a computer, comprising a set of instructions, which when loaded into said computer, causes the computer to carry out the previously described method.

### BRIEF DESCRIPTION OF THE DRAWINGS

Some embodiments of methods in accordance with embodiments of the present invention are now described, by way of example only, and with reference to the accompanying drawings, in which:
- figure 1 schematically illustrates a stream of web content requests;
- figure 2 schematically illustrates steps of a method for filtering web contents queried by users, according to a not limited embodiment.

### DESCRIPTION OF EMBODIMENTS

In the following description, well-known functions or constructions by the man skilled in the art are not described in detail since they would obscure the invention in unnecessary detail.

The method according to the invention aims at filtering web contents queried by users of a network. The network comprises a web server, and users are able to request web contents to the web server via browsers, by clicking on web addresses (URLs). The objective of the method is to discriminate between human and browser generated requests starting from the passive observation of web content traffic.

The basic idea of the invention is to look at the referrer field of web content requests received by the web server, because these fields contain all the addresses of the web contents requested by users. Indeed, if a web object is queried by a user, it appears as the referrer for all its objects.

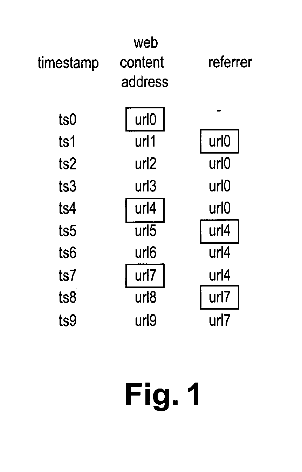

Figure 1 shows a typical stream of web content requests that correspond to an exemplary browsing activity. At time ts0, url0 is queried, the http GET request for this URL has a null (empty) referrer because it was queried for the first time. Once the browser receives the response for this URL (html code), it parses it to find the different objects forming the page. It then forms different http GET requests (one for each object) to load them. Each of these requests (url1, url2, and url3) has for referrer the previous page from which the URLs have been requested: url0. This is the same for url4 and its objects (url5 and url6) and url7 and its objects (url8 and url9). With this example, we can see that by focusing only on the referrer field, it is possible to detect all the pages requested by the user.

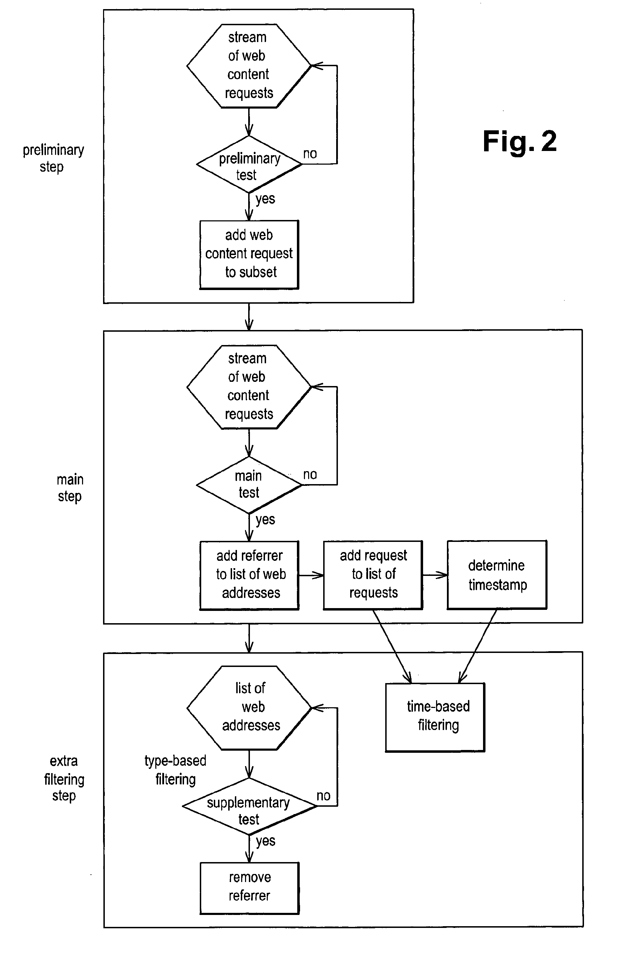

Steps of a method according to a not limited embodiment of the invention are illustrated in figure 2, and disclosed hereafter.

In a preliminary step, which is optional, for each web content request of the stream:
- performing a preliminary test, which is:
   ■ positive if the web content request is issued from a browser
   ■ negative otherwise
- in case of a positive preliminary test, adding the web content request to the subset.

This prefiltering of the web content traffic keeps only browser applications traffic and remove non-browser activity. Indeed, certain applications that are not browser user HTTP as a protocol to exchange information (e.g. update software, dropbox, etc). One way to implement such a prefiltering is to rely on the user agent field of the http web content request. The user agent is a field in the http web content request that inform about the application that generated the web content request. By inspecting this field, it is possible to guess if the application that generated it is a browser or not.

In a main step, for each web content request of the subset of the stream, named considered request:
- performing a main test, which is:
   ■ negative if the referrer of the considered request is comprised in a list of web addresses
   ■ positive otherwise
- in case of a positive main test, adding the referrer to the list of web addresses.

The method analyzes the subset of web content requests (http GET requests) looking for new referrers. If a new referrer is detected, the URL of this referrer is marked as a user URL, that is to say a URL that was queried by a human and not by a browser.

Thus, the method focuses on the referrer field to obtain a set of candidate main pages. This method has a very high recall, in the way that it captures almost all main pages. It has however, a lower precision: it has false positives (e.g. complex objects that are not main pages).

Indeed, this method detects not only main pages, but also all complex web objects whose loading needs to load other objects. Examples of such objects include (but not only) "complex" CSS file pointing to other CSS files. For instance, when such a CSS file is requested, it has as a referrer the URL of a main page. However, when this CSS file is loaded, it instructs the browser to get other CSS files in other locations. These CSS files will have as a referrer the complex CSS file. It should be noted that this behavior is rare.

An extra filtering step allows to get rid of this behavior. In order to reduce the set of false positives, filtering algorithms are applied on these candidate main pages. Already described filters from the literature can be also good candidates, for example the time-based algorithm or the type-based algorithm.

In case of a time-based algorithm, the timestamps at which the requests for main pages happened have to be detected. In this case, two embodiments are possible:
- either the timestamp is the occurrence time of the considered request,
- or the timestamp is the occurrence time of a particular web content request of the subset, such as:
   o said web object has the same address as the referrer
   o said particular web object request occurs before the considered request

The time between the request for the main page and the requests for its objects being small (the loading time of the html code), the timestamp as calculated in the first embodiment is a good approximation.

In case of a type-based algorithm, the extra filtering step comprises, for each referrer of the list of web addresses:
- performing a supplementary test, which is:
   ■ positive if the web content having the referrer as address is of a predetermined type
   ■ negative otherwise
- in case of a positive supplementary test, removing the referrer from the list of web addresses.

By analyzing the extensions of the URLs, it is possible to filter out URLs that are queries for files of some predetermined types, for example *.swf files (flash players), *.js files (javascripts) or *.css files (CSS files). This list is not exhaustive, other URLs that can be detected as non mainpage can be applied as well.

In another embodiment, these filtering algorithms can be coupled with other filtering techniques known by the man skilled in the art. For instance, before applying a time-based algorithm, it could be convenient to apply a stream-structure algorithm so as to reduce the temporal overlap between requests and enhance the performance of the time-based method.

In another embodiment, the web content requests are separated first by user (prior to any filtering) so as to reduce the overlap and to enhance the performance of the filtering methods.

It should be noted that the result of the method according to the invention can be used for marketing purposes (trend forecasting, marketing, profiling, etc). Indeed, thanks to the clearer vision offered on the human activity, it is easily possible to detect what real content is popular at the moment. Applying this on all URL requests is not meaningful because most of URLs requests correspond to machine activity and not to human activity.

It should also be noted that the result of the method according to the invention can be used in a content curation system as could be done by internet service providers.

## Claims

1. Method for filtering web contents queried by users from a stream of web content requests between a web server and a web browser, observed on a network, each web content request comprising a field referrer, said referrer representing a web address from which is issued the web content request, said method comprising a main step of: for each web content request of a subset of said stream, named considered request:
- performing a main test, which is:
■ negative if the referrer of the considered request is comprised in a list of web addresses
■ positive otherwise
- in case of a positive main test, adding the referrer to the list of web addresses.

2. Method for filtering web contents queried by users according to claim 1, comprising:
a. within the main step: in case of a positive main test, adding the considered request to a list of requests, and
b. further to the main step: performing an extra filtering applied to the requests of the list of requests.

3. Method for filtering web contents queried by users according to claim 2, wherein the extra filtering uses a time-based algorithm.

4. Method for filtering web contents queried by users according to claim 2, wherein the extra filtering uses a stream-structure algorithm followed by a time-based algorithm.

5. Method for filtering web contents queried by users according to claim 3 or claim 4, comprising, within the main step: in case of a positive main test, determining a timestamp associated to the referrer of the considered request.

6. Method of filtering web contents queried by users according to claim 5, wherein the timestamp is the occurrence time of the considered request.

7. Method for filtering web contents queried by users according to claim 5, wherein the timestamp is the occurrence time of a particular web content request of the subset, such as:
a. said web object has the same address as the referrer
b. said particular web object request occurs before the considered request.

8. Method for filtering web contents queried by users according to claim 2, wherein the extra filtering uses a type-based algorithm.

9. Method for filtering web contents queried by users according to claim 8, wherein the extra filtering step comprises, for each referrer of the list of web addresses:
a. performing a supplementary test, which is:
i. positive if the web content having the referrer as address is of a predetermined type
ii. negative otherwise
b. in case of a positive supplementary test, removing the referrer from the list of web addresses.

10. Method for filtering web contents queried by users according to any of the previous claims, comprising a preliminary step of: for each web content request of the stream:
- performing a preliminary test, which is:
■ positive if the web content request is issued from a browser
■ negative otherwise
- in case of a positive preliminary test, adding the web content request to the subset.

11. Method for filtering web contents queried by users according to any of the previous claims, comprising a step, prior to the main step, of separating the web content requests of the stream by users.

12. Computer program product for a computer, comprising a set of instructions, which when loaded into said computer, causes the computer to carry out the method for filtering web contents queried by users
